(19) Europäisches Patentamt
European Patent Office
Office européen des brevets

(11) **EP 2 006 782 A2**

(12) **EUROPEAN PATENT APPLICATION**

(43) Date of publication:
**24.12.2008 Bulletin 2008/52**

(51) Int Cl.:
***G06F 17/30*** *(2006.01)*

(21) Application number: **08010448.2**

(22) Date of filing: **09.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.06.2007 IL 18406907**

(71) Applicant: **Deutsche Telekom AG**
**53113 Bonn (DE)**

(72) Inventors:
• **Shapira, Bracha Leah**
**84728 Beer Sheva (IL)**
• **Steinbock, Nimrod**
**65282 Tel Aviv (IL)**
• **Shoval, Peretz**
**84965 Omer (IL)**

(74) Representative: **Flaccus, Rolf-Dieter**
**Patentanwalt**
**Bussardweg 10**
**50389 Wesseling (DE)**

(54) **Process of time-space collaborative filtering of information**

(57)    The invention is a process for collaborative filtering of information called Time-Space Filtering (TSIF). The invention is used in the fields of information filtering and publishing and is particularly useful in the field of providing web-based information, e.g. electronic newspapers. TSIF is a process of filtering and ranking the relevance of an article's content to specific readers, taking into account the time dimension of information as well as the factors traditionally considered by content-based or collaborative filtering.

## Description

## Field of the Invention

The invention is related to the fields of information filtering and publishing. Specifically the invention relates to the field of providing web-based information, e.g. electronic newspapers. More specifically the invention relates to a process of filtering and ranking the relevance of an article's content to specific readers, taking into account the time dimension of information as well as the factors traditionally considered by content-based or collaborative filtering.

## Background of the Invention

With the exponential growth of available information, and the rapid changes occurring in most areas of life, most of today's information becomes non-relevant as time passes. Information with strong dependency between its relevancy and the time dimension is referred to herein as Time-Constrained Information (TCI). An example for TCI is the News domain.

The following example is given to illustrate and provide an intuitive understanding of the problem that must be overcome if a web based information service of any type is to be able to provide information personally relevant to each of its subscribers:

Nancy is subscribed to an information service that publishes hundreds of news articles every day. Since Nancy's time is limited, she would like to receive only twenty articles every time she visits the service web site. She wants these twenty articles to be the most relevant articles to her current interests. Recall that news articles may become irrelevant in a relatively short period of time, say between a few hours and a few days.

Assume that Nancy is requested to manually rank the hundreds of articles according to relevancy to her interests without having to read the entire articles, and assume that the following two "resources" are available to her:

1. The opinion of other subscribers about these articles, especially subscribers with similar interests to hers (as defined by similarity of opinions about articles they read in the past); and
2. The content-based profile of each article, e.g. article topic, descriptive keywords, author, etc.

In the art ranking the relevance of articles based on resource 1 is known as collaborative filtering and ranking the relevance of articles based on resource 2 is known as content-based filtering.

As evident from common sense and supported by studies related to information filtering, the best filtering result will be obtained by using both of these resources. On one hand, Nancy would want to read an article with a content-based profile that matches her interests. On the other hand, her time is limited, there may be many articles whose profiles seem to "match" with her interests but are really not that good or interesting, because the articles' profiles may not accurately represent their actual context (considering well-known limitations of ambiguity of terms used to represent items and users' interests, text-extraction and indexing algorithms). Nancy would like to base her decision regarding what to read also on the opinions of other subscribers who have similar interests. It is reasonable to assume that Nancy's consideration relevance of the article will increase as more other readers who are similar to her will read that article.

In order to find the optimal combination between content-based filtering and collaborative filtering, two questions need to be addressed:

The first question is how much "weight" should be given to the opinions of others about the article (collaborative filtering) compared to the "weight" given to the article's profile (content-based profile)? There are two factors that should be considered:

1. The similarity/match between the document's profile to the user's profile: the stronger the match, the less important are the other users' opinions; and
2. The age of the article: a user may prefer to read an article even if it has only a few user opinions, rather than wait for more opinions and facing the risk that the article becomes obsolete and even disappear from the system.

The second question is to which opinions should a user give high consideration? In this case also two factors should be considered for each opinion:

1. How similar are the user's interests to the interests of the other person who gave the opinion? A user will give higher weight to the opinion of people with similar interests to his/hers;
2. How recent are the opinions? A user will give higher weight to more recent opinions; an article might have been interesting to someone at a certain time, but of no interest a few hours later.

Hence, it is clear that for effective filtering of TCI, relevancy of an article should be based on its content, on other/similar users' judgments, and on the time dimension. The time dimension should be considered both for determining the relative importance of other users' opinions (how "fresh" are their opinions), and for determining the "weight" that should be given to other peoples' opinions compared to the "weight" given to the article's content-based profile: the older an article, the more likely it is to be ranked according to other peoples' opinions.

Currently used filtering algorithms neglect the time dimension of information; they base their results on proximity calculations in a "content space" (either directly by content-based filtering or indirectly by collaborative filtering).

It is therefore a purpose of the present invention to provide an algorithmic framework for filtering time-constrained information that adds the time dimension to content-based and collaborative filtering; thereby providing effective filtering of time constrained information.

Further purposes and advantages of this invention will appear as the description proceeds.

## Summary of the Invention

In a first aspect the invention is a process for collaborative time-space filtering of information. The process of the invention comprises the following steps:

Step 1: receiving a request to provide a relevancy-ranked list of items for user X;
Step 2: using a content-based filter to rank the items in the repository for user X;
Step 3: using a time-dependant collaborative filter to rank the items in the repository for user X;
Step 4: computing time-dependant weights for combining the rankings from steps 2 and 3: and
Step 5: computing the overall ranking of the items by using the time-dependant weights to combine the two rankings.

The process of the invention is suited for filtering web based information. In a n embodiment the web based information is used to publish an electronic newspaper.

In an embodiment of the invention, the content-based filter ranks the items in the repository for user X based on the degree of similarity/match between user X's profile and the profile of each item. The time-dependant collaborative filter can rank the items in the repository for user X by taking into consideration the following assumptions:

a. that recent user opinions have a bigger influence on the ranking than older opinions; and
b. that opinions from users similar to user X have a bigger influence on the ranking than opinions from less-similar users

The time-dependant weights for combining the two rankings can be computed assuming that the weight of the collaborative filter is higher for older items. In an embodiment of the process of the invention, the collaborative filter compiles a User's Collaborative Profile comprising for each item:

a. a unique identifier of each item recommended to the user in the past;
b. a time-stamp of the time the item was recommended to the user; and
c. an indicator for the user's opinion of the item.

The collaborative filter uses the User's Collaborative Profile to compute a User Similarity Score for user X with each user J in the user repository. In an embodiment of the process, only the profiles accumulated over a selected period of time are compared instead of comparing the entire list of collaborative profiles of the users.

In the process of the invention, the collaborative filter ranks all the items by computing for each item k a value, which is the relative score given to the item, based on other users' recommendations. The weight of a recommendation from user J to item k is discounted according to the time that has passed since the recommendation. Different information types can receive different discounting factors. The time-dependant weight can be used to combine the two rankings by giving a bigger weight to the collaborative filter's ranking for older items. In an embodiment of the process of the invention, the process removes obsolete items from the items repository and archives them.

In another aspect the invention is a filtering engine comprising conventional hardware including input/output devices, memory modules, and servers, configured to collect and process the required information according to the steps of the process of the invention. The components of the filtering engine are configured to form the following main modules: the collaborative filter module, the rankings combination module, the update the collaborative filter module, and, the remove decayed items module.

The purpose of the collaborative filter module is to arrange a list items into a ranked list. The purpose of the rankings combination module is to combine the rankings for the content-based filter and the collaborative filter. The purpose of the update the collaborative filter module is to update the profile of a user after the user was presented with an item. The purpose of the remove decayed items module is to determine when an item became obsolete and define it as Archived.

All the above and other characteristics and advantages of the invention will be further understood through the following illustrative and non-limitative description of preferred embodiments thereof, with reference to the appended drawings.

## Brief Description of the Drawings

- Fig. 1 shows examples of Time(J, k) graphs with different discounting factors;
- Fig. 2 schematically illustrates the control flow of the collaborative filter;
- Fig. 3 schematically illustrates the control flow of the rankings combination module;
- Fig. 4 schematically illustrates the control flow of the update the collaborative profile module; and
- Fig. 5 schematically illustrates the control flow of the update the remove decayed items module.

## Detailed Description of Preferred Embodiments

The invention is a process for collaborative filtering of information called Time-Space Filtering (TSIF). The process is especially useful for use by suppliers of web based information, e.g. electronic newspapers. The process of the invention is comprised of the following main steps:

Step 1: Get a request to provide a relevancy-ranked list of items for user X. A request may come from a user who asks the system to submit/send him new items to read ("pull" mode), or from the system which initiates the distribution of relevant items to subscribed users ("push" model).

Step 2: Use a content-based filter to rank the items in the repository for user X. This is based on the degree of similarity/match between user X's profile and the profile of each item.

Step 3: Use a time-dependant collaborative filter to rank the items in the repository for user X. This filter considers the assumptions that recent user opinions have a bigger influence on the ranking than older opinions, and that opinions from users similar to user X have a bigger influence on the ranking than opinions from less-similar users

Step 4: Compute time-dependant weights for combining the two rankings (from steps 2 and 3). The weight of the collaborative filter is higher for older items i.e., items which have been available longer in the repository, and vice versa.

Step 5: Computed the overall ranking of the items by using the time-dependant weights to combine the two rankings.

## The Content-Based Filter

There exist several different content-based (CB) filters which can be used in step 2 of the present invention. One such CB filter is disclosed in Copending Israeli Patent Application IL183391 by the same applicant, entitled "Ontology-Content-Based Filtering Method For Personalized Newspapers" the description of which, including publications referenced therein, is incorporated herein by reference.

Precise knowledge of the CB filter is not important to the remainder of this description; it is only necessary to assume that a CB filter exists that can compute the similarity between a user's profile and an item's profile In the second step, the CB filter ranks the relevant items according to how similar they are to the user's profile, and returns a ranked list of items notated <CB>.

## The Collaborative Filter

The next (third) step in TSIF is ranking of the items with the time-space collaborative filtering algorithm This filter derives its recommendations not only according to the "similarity" between users but also according to the time proximity i.e., it gives a higher weight to more recent recommendations.

The collaborative filter makes use of a User's Collaborative Profile, which is a table with three columns:

- Column 1 is a unique identifier of each item recommended to the user in the past;
- Column 2 is a time-stamp of the time the item was recommended to the user; and
- Column 3 is a 0\1 indicator for the user's opinion of the item: 0 stands for "not interesting"; 1 stands for "interesting".

The collaborative filtering algorithm computes the User Similarity Score USS(X, J) for user X with each user J in the user repository: The User Similarity Score is computed using the following formula:

$$USS(X,J) = Max \left\{ Min\_Value, \frac{Mutual(X,J)}{[N(X) + N(J)] \times \frac{1}{2}} \right\}$$

Where:

- Mutual(X, J) = Number of items that both user X and user J deemed as interesting (both users clicked on these items);
- N(X) = Number of items in User X collaborative profile;
- N(J) = Number of items in User J collaborative profile; and
- Min_Value = default value greater than 0 but smaller than any other USS (e.g. 0.01).

The higher the USS the more similar the two users are. The rationale for computing USS is that the similarity between users can be induced from the number of items they both deemed as interesting. However, this needs to be normalized. (Note: Min_Value will be explained hereinbelow.)

For example: If the similarity between user X and user J is compared to the similarity between user X and user K, and in both cases the number of mutual items is the same, then user X is said to be more similar to the user with the smaller number of items in his profile (because it is "harder" to find the same number of mutual items in a smaller list). It is to be noted that, instead of comparing the entire collaborative profiles of the users, i.e. a list of all the items the users received in the past, it may be beneficial to compare the profiles accumulated over only a recent period of time, e.g. the last 30 days. The optimal time window for comparing the profiles will be determined for each application.

The next stage of Step 3 is to use the collaborative filter to rank all the items. To accomplish this the collaborative filter computes for each item k a value notated CFR(k), which is the relative score given to the item, based on other users' opinions:

$$CFR(k) = \frac{\sum_{j} [USS(X,J) \times Time(J,k)]}{Users(k)}$$

Where:

- j = An index for all the users who were presented with item k;
- USS(X, J) = the computed User Similarity Score between user X and user J;
- Time(J, k) = a time-adjusting weight (described hereinbelow); and
- Users(k) = the number of users that were presented with item k (click or no click).

The range of CFR is 0 to 1, with 1 corresponding to the highest rank.

- Using CFR(k), the filter sorts all the items into a vector notated <CF>. Items with high CFR get higher index positions.
- Each item k in the vector has a value CF-Rank(k) that is equal to its vector index (starting from 0). For example, if item k is the 3rd item in <CF> then CF-Rank(k)= 2

Time (J, k) discounts the weight of a recommendation from user J to item k according to the time that has passed since the recommendation. Several alternatives for computing this factor are possible. For example, if it is assumed that there is an exponential decline of relevancy; Time (J, k) might be expressed as:

$$Time\ (J,k) = 1/e\text{\^{}}at$$

Where: t = Number of hours since user J indicated interest in item k, and a =constant to be decided based on trial and error.

In this example: if a = 0.1 then:

- After 1 hours Time (J, k) = 0.9
- After 2 hours Time (J, k) = 0.8
- After 5 hours Time (J, k) = 0.6
- After 24 hours Time (J, k) = 0.1

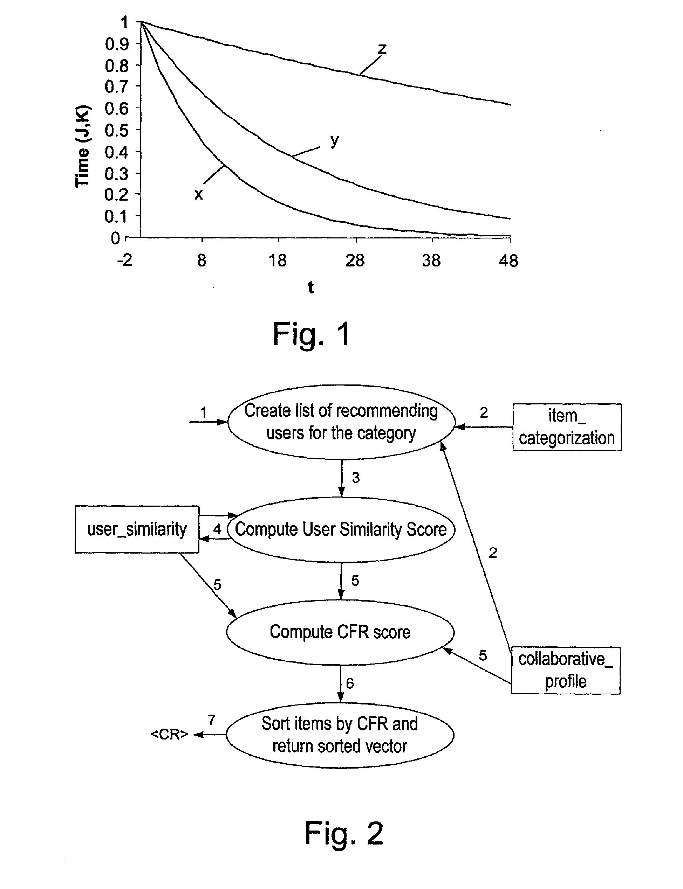

Several Time (J, k) vs. t (in hours) graphs are presented in Fig. 1, as examples, with different values for the discounting constant a. In Fig. 1, graph x is for a=0.1, graph y for a=0.05, and graph z for a=0.01. In addition to determining the most suitable time discounting method for a particular application, it seems intuitive that different information types will require different discounting factors. For example, a news article may lose relevancy much faster than a book review article.

In step four of the process of the invention time-dependant weights for combining the two rankings from steps 2 and 3 are computed. The time-dependant weight is designated herein as Maturity(k). This weight is used to combine the two rankings by giving a bigger weight to the collaborative filter's ranking for more "mature", i.e. items that gained many clicks and *vice versa..* Several alternatives for computing Maturity(k) are known to the inventors. For example, assuming a linear increase of "recommendation power" up to certain upper limit, designated as MAX_clicks, then Maturity (k) can be expressed as :

$$\text{Maturity(k)} = \frac{\text{Min \{Number of clicks, MAX\_clicks\}}}{\text{MAX\_clicks}}$$

Where:

- Number of Clicks is the number of clicks the items has gained, and
- MAX_clicks - is a constant reflecting the upper limits of clicks per item that affects its c to be decided based on trial and error.

In this example: if MAX_clicks is = 500 then:

- After 0 clicks Maturity(k) = 0
- After 100 clicks Maturity(k) = 0.2
- After 400 clikcs Maturity(k) = 0.8
- After 500 clicks Maturity(k) = 1

**Combining Content-based and Collaborative Rankings**

Step five of the filtering process of the invention is arrived at with two "vectors" <CF> and <CB>. Each of these vectors contains a ranked list according to a different algorithm (collaborative and the content-based). Each of the vectors is sorted with the highest rank items at the highest index positions. The purpose of this step is to create a combined ranking for the items in the repository for user X. The combined rank for item k, notated as Rank(k), is computed as follows:

$$\text{Rank(k)} = \left[(1 - \text{Maturity(k)}) \times \text{CB\_Rank(k)}\right] + \left[\text{Maturity(k)} \times \text{CF\_Rank(k)}\right]$$

After the algorithm computes Rank(k) for all the items in the repository, it sorts the items according to Rank(k) and presents the user with the sorted list. The higher an item is on the list, the better rank it has. If the user wants to view only, say, twenty items, the user is presented with the last 20 items from the list.

**Handling New User**

A new user has no collaborative profile since he has not yet clicked any items. In that case, the system provides the user with the most popular items. For that the system keeps track of the most popular items, i.e., the items that have the most number of clicks (discounted by time).

**Removal of Decayed Information Items**

The filtering process needs to remove obsolete items from the items repository and archive them. The approach taken in the present invention for dealing with this is to implicitly let the users' community decide when an item becomes obsolete. Since, after a certain period of time, an item is recommended to users mainly based on other users' opinions (i.e. the collaborative filtering component), it is assumed that if an item was not recommended to anyone for a certain period of time it is probably obsolete. Hence, the filtering process maintains for each item in the repository a record of the last time it was recommended to a user. If an item has not been recommended to any user for more than a pre-configured time interval, e.g. 24 hours, it is removed from the repository and preferably transferred to an archive, fro which it can be recovered if specifically called for by a user.

**Capturing Users' feedback**

Items may be presented to the user as headlines with a "more" link next to each headline. (An item's headline may include the item's title and potentially some more information such as the source, author and some text from the item's body.) When a user clicks on a "more" link of a headline, the system presents the user with the entire content of the item. The content page for the item may also include two links: "Interesting" and "not interesting". If the user clicks on the "not interesting" link, the system will deem the item as not "clicked"; this in fact allows the user to "take back" his click on the "more" link. This explicit relevance feedback is not mandatory, i.e., the user may provide it if he is willing to.

**Main Function of the Filtering Engine**

The process of the invention is carried out on a filtering engine comprising conventional hardware including input/output devices, memory modules, servers, etc. configured to collect and process the required information according to the steps outlined above. The physical system can be put together in different ways by skilled persons following the description herein. The main features of the information flow in main parts of the filtering engine will now be described.

**The Collaborative Filter Module**

Fig. 2 schematically illustrates the control flow of the collaborative filter. As described herein above, the purpose of the collaborative filter is to create the vector <CF> from a list of items. In this and the following figures the rectangles represent input to the collaborative filter module from other modules of the filtering engine, the ellipses represent computational and sorting steps carried out within the module, and the arrows show the direction of the data flow. The relative order in which the data moves through the module is indicated by the numerals above the arrows shown in Fig. 2, wherein the numerals indicate the following stage of the process:

1. The collaborative filter is called to create a ranked list of items for user_id
2. Prepare a list of all users who have read items in category_id (where the category_id can be of any level of the categories hierarchy, it can be also the root of categories and thus refer to the whole repository of items)
3. Compute USS between user-id and all those users (from Step 2)
4. Updates the user-similarity table with the computed USS scores
5. Compute CFR score for each item in category-id. This is done by weighting user clicks based on their USS score (similarity to user-id) and the time they clicked on the item
6. Sort items by CFR
7. Return vector <CR>

**The Rankings Combination Module**

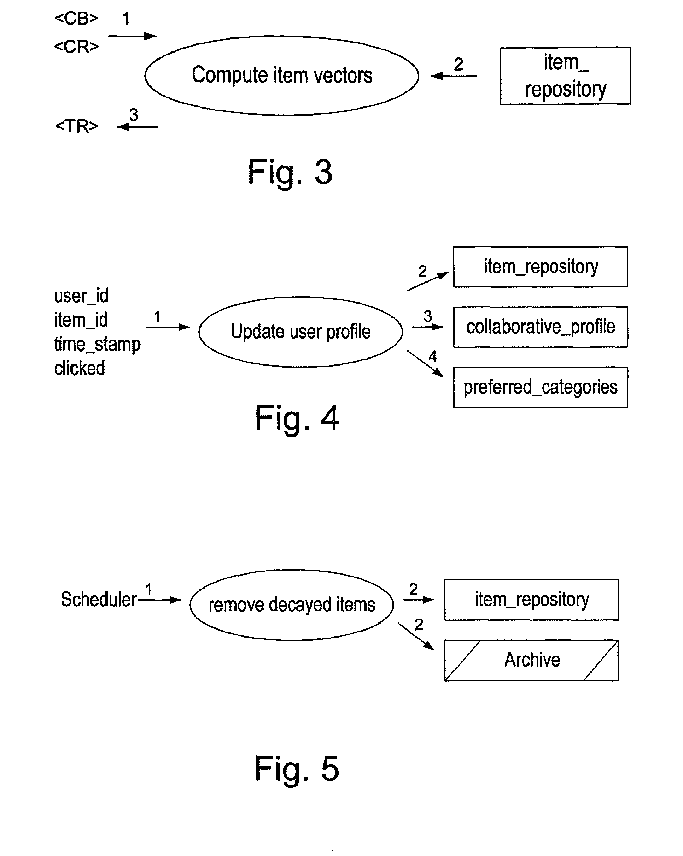

The rankings combination module combines the rankings for the content-based filter and the collaborative filter. Fig. 3 schematically illustrates the control flow of this module. The relative order in which the data moves through the rankings combination module is indicated by the numerals above the arrows shown in Fig. 3, wherein the numerals indicate the following stage of the process:

1. Start with <CB> and <CR>. Both vectors contain the same items, sorted differently.
2. For each item create a combined score by computing a weighted average between the indexes (locations) of the item in each of the vectors. The weighting between the two indexes is based on the time the item is in the system (read from the item-repository table).
3. Sort the items by the new score and return the result vector <TR>.

**The Update the Collaborative Profile Module**

Fig. 4 schematically illustrates the control flow of the update the collaborative profile module. This module updates the profile of a user after the user was presented with an item (whether he clicked on the item or not). The module input is the user-id, which identifies the user, and the item-id, which identifies the item presented to the user. Also the clicked parameter specifies if the user clicked on the item or not, and the time-stamp parameter specifies the time the item was presented to the user. The relative order in which the data moves through the update the collaborative profile module is indicated by the numerals above the arrows shown in Fig. 4, wherein the numerals indicate the following stage of the process:

1. A request to update the collaborative profile of user-id with item-id, timestamp, and clicked\not-clicked indicator.
2. Update the last-recommended field for the item (the last time the item was recommended to anyone).
3. Update the user's collaborative profile with a new item-id (including the time-stamp and the clicked indicator).
4. Add another click to the item's category under the user's preferred-categories table.

**Remove Decayed Items Module**

Fig. 5 schematically illustrates the control flow of the update the remove decayed items module. This module determines that an item became obsolete and defines it as Archived. An Archived item will no longer be "pushed" to users, but it can be "pulled" by a user who browses the system. The relative order in which the data moves through the remove decayed items module is indicated by the numerals above the arrows shown in Fig. 5, wherein the numerals indicate the following stage of the process:

1. Invoke the Item Remover every 24 hours (or other pre-configured time interval).
2. For each item in item-repository check if item was not recommended in the last 24 hours. If it was not recommended then move the item from item-repository to the Archive.

**Example**

An example for the entire filtering process of the invention is now presented:

**Step 1:**

The collaborative filtering module of the system is asked to rank the items in the repository for the user Nancy. The items in repository are presented in the following table:

| Item | Hours (since added to the repository) |
|------|----------------------------------------|
| A | 3 |
| B | 6 |
| C | 12 |
| D | 4 |
| E | 1 |

**Step 2:**

Assume that the content-based filter (which as said previously is not described herein) returned the following <CB>:

| CB | Item |
|----|------|
| 1 | E |
| 2 | D |
| 3 | A |
| 4 | B |
| 5 | C |

**Step 3:**

Now the system of the invention calls the collaborative filter to rank the items:

Nancy's Collaborative Profile is:

| Item | Clicked |
|------|---------|
| U | 0 |
| V | 0 |
| W | 1 |
| X | 1 |
| Y | 0 |
| Z | 1 |

Assume that there are 4 other user profiles. The profiles are shown in the following table with the calculated column Time (User, Item).

| Bob's collaborative Profile | | | |
|------|---------|-------------------------|-----------------------------------|
| **Item** | **Clicked** | **Hours (Since Presented)** | **Time (Bob, item) = $1/(e^{0.1 \cdot Hours})$** |
| U | 0 | Not relevant | Not relevant |
| V | 0 | Not relevant | Not relevant |
| W | 1 | Not relevant | Not relevant |
| X | 1 | Not relevant | Not relevant |
| Y | 0 | Not relevant | Not relevant |
| Z | 1 | Not relevant | Not relevant |
| A | 1 | 1 | 0.9 |
| B | 1 | 1 | 0.9 |
| C | 0 | 1 | 0.9 |
| D | 1 | 1 | 0.9 |

| Ruth's Collaborative Profile | | | |
|------|---------|-------------------------|-----------------------------------|
| **Item** | **Clicked** | **Hours (Since Presented)** | **Time (Ruth, item) = $1/(e^{0.1 \cdot Hours})$** |
| U | 1 | Not relevant | Not relevant |
| V | 0 | Not relevant | Not relevant |

9

(continued)

| Ruth's Collaborative Profile | | | |
|---|---|---|---|
| **Item** | **Clicked** | **Hours (Since Presented)** | **Time (Ruth, item) = 1/(e^0.1\*Hours)** |
| X | 1 | Not relevant | Not relevant |
| Y | 0 | Not relevant | Not relevant |
| A | 0 | 0 | 1 |
| B | 1 | 0 | 1 |
| C | 0 | 0 | 1 |
| E | 1 | 0 | 1 |

| Mike's Collaborative Profile | | | |
|---|---|---|---|
| **Item** | **Clicked** | **Hours (Since Presented)** | **Time (Mike, item) = 1/(e^0.1\*Hours)** |
| V | 1 | Not relevant | Not relevant |
| W | 1 | Not relevant | Not relevant |
| Y | 0 | Not relevant | Not relevant |
| Z | 0 | Not relevant | Not relevant |
| A | 0 | 3 | 0.74 |
| B | 1 | 3 | 0.74 |
| C | 0 | 3 | 0.74 |

| John's Collaborative Profile | | | |
|---|---|---|---|
| **Item** | **Clicked** | **Hours (Since Presented)** | **Time (John, item) = 1/(e^0.1\*Hours)** |
| U | 1 | Not relevant | Not relevant |
| V | 1 | Not relevant | Not relevant |
| W | 0 | Not relevant | Not relevant |
| X | 0 | Not relevant | Not relevant |
| Y | 1 | Not relevant | Not relevant |
| Z | 0 | Not relevant | Not relevant |
| B | 1 | 4 | 0.67 |
| C | 0 | 4 | 0.67 |
| D | 1 | 4 | 0.67 |

Note that in the above table, some entries are marked as "Not relevant" since they are new, i.e. they have not yet been presented to user Nancy.

The system first calculates the User Similarity Score (USS) for Nancy with all the other users (note that this step is conducted off-line for optimization reasons; it is presented here as in-line for clarity) using the formula described hereinabove:

$$USS(X,J) = Max \left\{ Min\_Value, \; \frac{Mutual(X,J)}{\left[N(X) + N(J)\right] \times \frac{1}{2}} \right\}$$

The results for this example are:

USS (Nancy, Bob) = Max (0.05, 3 /(6+10)*0.5) = **0.375**
USS (Nancy, Ruth) = Max (0.05, 1 /(6+8)*0.5) = **0.143**
USS (Nancy, Mike) = Max (0.05, 1 /(6+7)*0.5) = **0.154**
USS (Nancy, John) = Max (0.05, 3 /(6+10)*0.5) = **0.05**

The system now computes the Collaborative Filtering Rank for each item CFR (k) using the formula described hereinabove:

$$CFR(k) = \frac{\sum_{j} \left[ USS(X,J) \times Time(J,k) \right]}{Users(k)}$$

The results for this example are:

CFR (Nancy, Item A) = [(0.375 x 0.9) + (0.143 x 1) + (0.154 x 0.74)] / 3 = 0.113
CFR (Nancy, Item B) = ... = 0.157
CFR (Nancy, Item C) = ... = 0.000
CFR (Nancy, Item D) = [(0.375 x 0.9) + (0.05 x 0.67)] / 2 = 0.186
CFR (Nancy, Item E) = ... = 0.143

The resulting <CF> vector is:

| CF | Item |
|----|------|
| 1 | D |
| 2 | B |
| 3 | E |
| 4 | A |
| 5 | C |

**Step 4:**

The Maturity factor for all the items is now computed assuming that MAX_clicks is set to 10:

| Item | Number of clicks gained | $Maturity = \dfrac{Min\{Number\ of\ clicks, MAX\_clicks\}}{MAX\_clicks}$ | | |
|------|------|------|------|------|
| A | 1 | 0.1 | | |

(continued)

| Item | Number of clicks gained | $\text{Maturity} = \dfrac{\text{Min \{Number of clicks, MAX\_clicks\}}}{\text{MAX\_clicks}}$ |
|---|---|---|
| B | 3 | 0.3 |
| C | 0 | 0. |
| D | 2 | 0.2 |
| E | 1 | 0.1 |

**Step 5:**

Finally, <CB> is combined with <CF> to get the combined (total) rank <TR>. For simplicity a simple linear merge of the two lists is shown. A more correct and effective method of merging the two lists can be defined for use in practice:

| CF | Item | | CB | Item |
|---|---|---|---|---|
| 1 | D | | 1 | E |
| 2 | B | | 2 | D |
| 3 | E | | 3 | A |
| 4 | A | | 4 | B |
| 5 | C | | 5 | C |

Applying the formula:

$$\text{Rank(k)} = \big[(1 - \text{Maturity(k)}) \times \text{CB\_Rank(k)}\big] + \big[\text{Maturity(k)} \times \text{CF\_Rank(k)}\big]$$

yields:

TR (A) = [(1-0.1) x 3] + [0.1 x 4] = 3.1
TR (B) = ... = 3.4
TR (C) = ... = 5.000
TR(D) = ... = 1.8
TR (E) = [(1-0.1) x 1] + [0.1 x 3] = 1.2

Expressed in the form of a table, the filtering system of the invention has produced the following time-space collaborative ranking of the items in the repository for Nancy:

| TR | Item |
|---|---|
| 5 | C |
| 3.4 | B |
| 3.1 | A |
| 1.8 | D |
| 1.2 | E |

Although embodiments of the invention have been described by way of illustration, it will be understood that the invention may be carried out with many variations, modifications, and adaptations, without exceeding the scope of the claims.

**Claims**

1. A process for collaborative time-space filtering of information comprising the steps:

   Step 1: receiving a request to provide a relevancy-ranked list of items for user X;
   Step 2: using a content-based filter to rank the items in the repository for user X;
   Step 3: using a time-dependant collaborative filter to rank the items in the repository for user X;
   Step 4: computing time-dependant weights for combining the rankings from steps 2 and 3: and
   Step 5: computing the overall ranking of the items by using the time-dependant weights to combine the two rankings.

2. A process according to claim 1, wherein the information is web based information.

3. A process according to claim 2, wherein the web based information is used to publish an electronic newspaper.

4. A process according to claim 1, wherein the content-based filter ranks the items in the repository for user X based on the degree of similarity/match between user X's profile and the profile of each item.

5. A process according to claim 1, wherein time-dependant collaborative filter ranks the items in the repository for user X by taking into consideration the following assumptions:

   a. that recent user opinions have a bigger influence on the ranking than older opinions; and
   b. that opinions from users similar to user X have a bigger influence on the ranking than opinions from less-similar users

6. A process according to claim 1, wherein the time-dependant weights for combining the two rankings are computed assuming that the weight of the collaborative filter is higher for older items.

7. A process according to claim 1, wherein the collaborative filter compiles a User's Collaborative Profile comprising for each item:

   a. a unique identifier of each item recommended to the user in the past;
   b. a time-stamp of the time the item was recommended to the user; and
   c. an indicator for the user's opinion of the item.

8. A process according to claim 7, wherein the collaborative filter uses the User's Collaborative Profile to compute a User Similarity Score for user X with each user J in the user repository.

9. A process according to claim 8, wherein instead of comparing the entire list of collaborative profiles of the users , only the profiles accumulated over a selected period of time are compared.

10. A process according to claim 1, wherein the collaborative filter ranks all the items by computing for each item k a value, which is the relative score given to said item, based on other users' recommendations.

11. A process according to claim 10, wherein the weight of a recommendation from user J to item k is discounted according to the time that has passed since the recommendation.

12. A process according to claim 11, wherein different information types receive different discounting factors.

13. A process according to claim 1, wherein the time-dependant weight is used to combine the two rankings by giving a bigger weight to the collaborative filter's ranking for older items.

14. A process according to claim 1, wherein said process removes obsolete items from the items repository and archives them.

**15.** A filtering engine comprising conventional hardware including input/output devices, memory modules, and servers, configured to collect and process the required information according to the steps of claim 1; wherein said components are configured to form the following main modules:

     a. the collaborative filter module;
     b. the rankings combination module;
     c. the update the collaborative filter module; and
     d. the remove decayed items module.

**16.** A filtering engine according to claim 15, wherein the purpose of the collaborative filter module is to arrange a list items into a ranked list.

**17.** A filtering engine according to claim 15, wherein the purpose of the rankings combination module is to combine the rankings for the content-based filter and the collaborative filter.

**18.** A filtering engine according to claim 15, wherein the purpose of the update the collaborative filter module is to update the profile of a user after the user was presented with an item.

**19.** A filtering engine according to claim 15, wherein the purpose of the remove decayed items module is to determine when an item became obsolete and define it as Archived.

Fig. 1

Fig. 2

<CB>  1
<CR>  →

Compute item vectors  ← 2  item_ repository

<TR>  ← 3

# Fig. 3

user_id
item_id  1 →  Update user profile
time_stamp
clicked

2 →  item_repository

3 →  collaborative_profile

4 →  preferred_categories

# Fig. 4

Scheduler 1 →  remove decayed items

2 →  item_repository

2 →  Archive

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IL 183391